# FASCICULE DE BREVET EUROPEEN

(11) **EP 1 205 374 B1**
(45) Date de publication et mention de la délivrance du brevet: **15.03.2006**
(21) Numéro de dépôt: 01402883.1
(22) Date de dépôt: 09.11.2001
(51) Int. Cl.: B62D 9/00, B60G 9/02

(54) **Mécanisme de direction pour véhicule ou engin**
Lenkung für ein Fahrzeug oder eine Maschine
Steering mechanism for a vehicle or a machine

(30) Priorité: 09.11.2000 FR 0014370
(43) Date de publication de la demande: 15.05.2002
(73) Titulaire: DeJonghe, Bernard Alphonse Médard, 60220 Formerie (FR)
(72) Inventeur: DeJonghe, Bernard Alphonse Médard, 60220 Formerie (FR)
(74) Mandataire: Chambon, Gérard

(56) Documents cités:
- EP-A- 0 634 315
- EP-A- 0 761 481
- EP-A- 0 785 124
- DE-A- 1 655 035

## Description

L'invention concerne un mécanisme de direction pour véhicule ou engin, destiné à diminuer le rayon de braquage, en particulier mais non exclusivement, pour les tracteurs agricoles ou autres, les engins de travaux publics, les tondeuses autoportées, etc.

Les mécanismes de direction comportent de manière connue un essieu formant ou non un pont, destiné à être fixé au châssis du véhicule ou de l'engin à équiper et dont les extrémités comportent des articulations pour des roues directionnelles.

On connaît l'essieu simplement pivotant, les axes des roues restant dans le prolongement l'un de l'autre, un tel essieu étant encore appelé essieu à cheville ouvrière.

Toutefois, pour notamment des problèmes de stabilité, on connaît la direction dite à essieu brisé dans laquelle on aménage un axe de pivotement à chaque extrémité de l'essieu pour chacune des roues.

En vue d'améliorer en le diminuant le rayon de braquage dans un tel mécanisme, on a cherché divers moyens, comme par exemple le dispositif décrit dans le document EP 0 785 124 A, qui propose un support pour l'essieu qui peut pivoter autour d'un axe vertical, un peu à la manière d'un essieu à cheville ouvrière.

Pour notamment simplifier, pouvoir s'adapter à divers engins existants et apporter d'autres avantages dont il sera question ci-après, l'inventeur propose un mécanisme comportant un essieu qui est destiné à être fixé au châssis du véhicule ou de l'engin au moyen d'un support et dont les extrémités comportent des articulations pour des roues directionnelles, mais qui est notamment remarquable en ce que le support de fixation de l'essieu au châssis est articulé d'une part, à l'essieu, en pouvant pivoter relativement à celui-ci autour d'un premier axe sensiblement perpendiculaire audit essieu et dans un plan sensiblement horizontal au repos et, d'autre part, au châssis, en pouvant pivoter relativement à celui-ci autour d'un second axe qui converge géométriquement avec ledit premier axe de pivotement tandis qu'une barre de liaison est articulée par ses extrémités, d'une part, à l'articulation de l'une des roues et d'autre part, soit au châssis, soit au support d'essieu.

Avantageusement, les deux axes de pivotement convergent vers l'arrière du véhicule ou engin.

Selon un mode de réalisation, la barre de liaison est articulée au support d'essieu, à l'avant de celui-ci par rapport audit essieu, mais selon un autre mode de réalisation, la barre de liaison est articulée au châssis, vers l'arrière par rapport à l'essieu.

Par exemple, le premier axe de pivotement du support est constitué par des demi-axes solidaires de l'essieu, qui tourillonnent dans des coussinets du support et avantageusement dans ce cas, les coussinets du support pour ledit axe de pivotement sont démontables, mais on pourrait bien sûr concevoir des demi-axes solidaires du support et des coussinets solidaires de l'essieu.

Selon un mode de réalisation, le second axe de pivotement du support est solidaire de celui-ci et tourillonne par ses extrémités dans des paliers du châssis.

De même que précédemment bien entendu, l'axe de pivotement pourrait être solidaire du châssis et les paliers solidaires du support.

Selon un mode de réalisation particulier, le support d'essieu est articulé sur une monture intermédiaire fixée sur le châssis, de manière amortie et/ou réglable en hauteur.

Par exemple, la monture intermédiaire se présente sous la forme d'une plaque articulée d'un côté et suspendue de manière amortie et/ou réglable de l'autre.

Un tel mode de réalisation qui permet d'avoir un essieu amorti améliore notamment bien sûr le confort et/ou autorise un réglage de l'écartement de l'essieu par rapport au châssis.

D'autres moyens peuvent bien entendu être prévus et en particulier le support d'essieu peut, par exemple, comporter au moins une butée destinée à coopérer avec au moins une partie ou une butée du châssis du véhicule ou engin afin de limiter le basculement dudit support.

L'invention sera bien comprise à la lecture de la description qui va suivre et qui se réfère aux dessins annexés dans lesquels :
- la figure 1 montre schématiquement en élévation un mode de réalisation selon l'invention, l'essieu étant représenté en bout,
- les figures 2 et 3 sont des coupes selon II-II de la figure 1 et rotation du dessin de 90°, les roues étant en position respectivement droite et braquée,
- la figure 4 est une vue en perspective d'un mécanisme selon l'invention, vu de face,
- la figure 5 montre schématiquement en vue de dessus une monture intermédiaire pour le support d'essieu,
- la figure 6 correspond à la figure 1 avec un support d'essieu articulé sur une monture intermédiaire du type de celle de la figure 5,

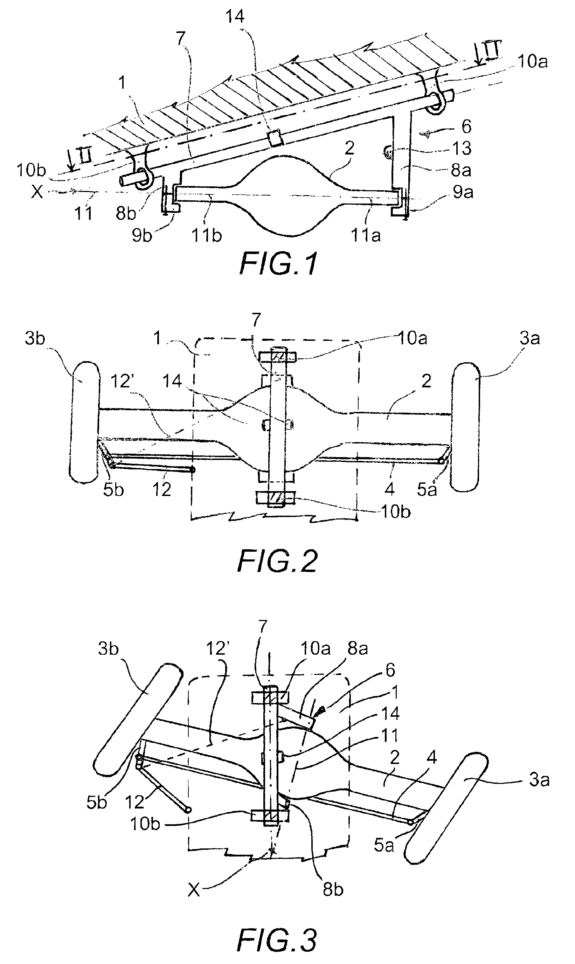

les figures 1, 2, 3, 5 et 6 sont volontairement schématiques pour une meilleure compréhension.

Sur les dessins, on peut voir le châssis 1 d'un véhicule ou engin sur lequel est monté un essieu 2 qui peut bien entendu comme ici comporter certains organes de transmission et constituer ainsi un pont et plus particulièrement un pont avant. Le châssis 1, en principe non visible sur les figures 2 et 3, est quand même schématisé en traits interrompus pour une meilleure compréhension.

L'essieu 2 est bien sûr destiné à supporter à ses extrémités des roues 3a, 3b qui sont articulées sur ledit essieu (figures 2, 3 et 4).

Les roues 3a et 3b peuvent être braquées classiquement au moyen d'une barre d'accouplement 4 (figures 2, 3 et 4) actionnée par un volant non représenté.

Comme le montrent bien les figures 2 et 3, la barre d'accouplement 4 est, par exemple, articulée aux roues 3a, 3b par des biellettes respectivement 5a, 5b (le côté choisi pour la barre 4 par rapport à l'essieu 2 est quelconque).

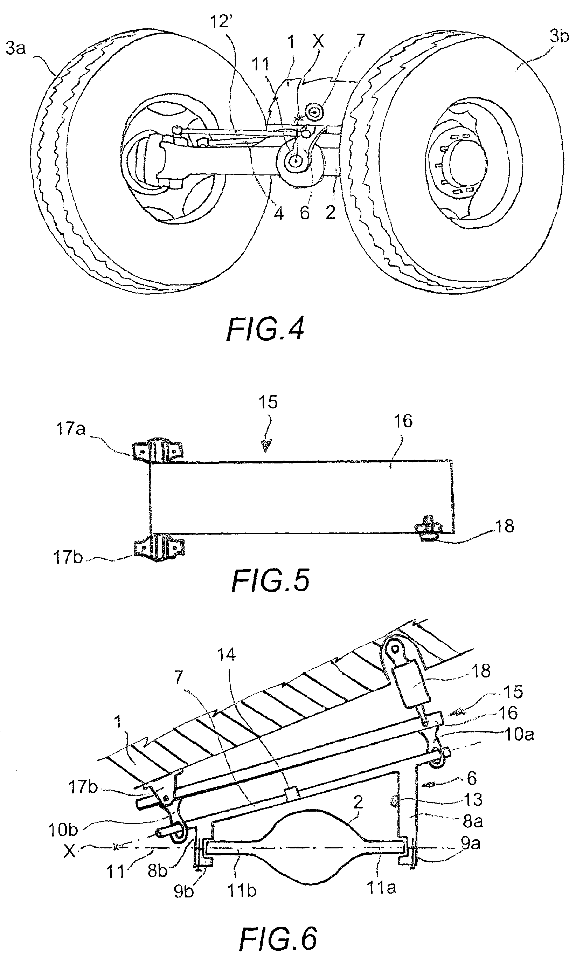

L'essieu 2 est monté sur le châssis 1 au moyen d'un support 6, sous forme ici d'un étrier, comportant un axe de pivotement 7 muni de deux bras 8a, 8b de longueurs inégales dont les extrémités sont pourvues de paliers ou coussinets avantageusement démontables respectivement 9a, 9b (figures 1 et 6).

L'axe de pivotement 7 est articulé à ses extrémités dans des paliers 10a, 10b solidaires du châssis 1 (figure 1), ou solidaires d'une partie fixée audit châssis (figure 6) et dont il sera question ci-après, l'axe 7 étant dirigé dans le sens longitudinal, c'est-à-dire perpendiculaire à l'essieu lorsque les roues sont droites (figure 2).

Par ailleurs, l'essieu 2 est pourvu de deux demi-axes 11a, 11b (figures 1 et 6) disposés perpendiculairement à l'axe longitudinal dudit essieu et qui sont aménagés pour tourillonner dans les coussinets respectivement 9a, 9b du support 6.

Les demi-axes 11a, 11b forment ainsi un axe de pivotement 11.

Du fait des longueurs différentes des bras 8a et 8b du support 6, les axes de pivotement du support 6, par rapport respectivement au châssis et à l'essieu, soit respectivement l'axe 7 et l'axe 11, convergent géométriquement vers un point noté X sur les figures 1, 3, 4 et 6. Ce point X est avantageusement situé vers l'arrière du véhicule ou engin, de telle sorte que par rapport à l' axe 11 sensiblement horizontal au repos, l'axe 7 est incliné de haut en bas et vers l'arrière (figures 1 et 6).

En outre, on peut voir sur les figures 2 et 3 qu'une barre de liaison 12 comporte des rotules à ses extrémités et relie de manière articulée la biellette 5b d'articulation de la roue 3b et le châssis 1 du côté du point de convergence X par rapport à l'essieu 2.

Toutefois, selon un autre mode de réalisation, la barre de liaison peut être articulée par une extrémité, comme précisé ci-avant, sur la biellette d'articulation de la roue, mais par contre, par son autre extrémité, elle est articulée au support 6, par exemple par une patte 13 dont il est muni (figures 1 et 6). Une telle barre de liaison est représentée en 12' sur le mode de réalisation de la figure 4 et elle est visualisée comme solution alternative en traits interrompus sur les figures 2 et 3.

Les positions des fixations articulées des extrémités des barres 12 ou 12' peuvent en outre être multiples et choisies selon l'utilisation désirée.

De plus bien entendu, la barre 12 ou 12' peut être articulée au choix sur l'une ou l'autre des roues 3a, 3b. D'ailleurs, si les barres 12' représentées en traits interrompus sur les figures 2 et 3 sont articulées du côté de la roue 3b, par contre, sur la figure 4, la barre 12' est articulée sur la roue 3a (dans cette figure, c'est l'avant qui est visible).

Sur les figures 1, 2, 3 et 6, on peut en outre voir des butées 14 solidaires du support 6 et en particulier ici de l'axe 7 dudit support.

Ces butées 14, avantageusement réglables, sont destinées à coopérer avec des butées correspondantes du châssis, ou des parties de celui-ci, pour limiter le basculement du support comme il sera expliqué ci-après.

Le mode de réalisation de la figure 6 est semblable à celui des figures 1 à 3 mais le support 6 de l'essieu est fixé au châssis 1 au moyen d'une monture 15 intermédiaire.

La monture 15 représentée par le dessus sur la figure 5, est constituée par une plaque 16 qui est montée d'un côté (droite ou gauche selon les applications) de manière articulée sur le châssis au moyen de paliers tels que 17a, 17b (figures 5 et 6), tandis qu'elle est suspendue de manière amortie et/ou réglable en hauteur de l'autre côté, ici par l'intermédiaire d'un vérin 18.

Le vérin 18 peut être remplacé ou combiné avec un amortisseur de façon à améliorer le confort. Un vérin réglable permet, par exemple, de régler l'écartement de l'essieu 2 par rapport au châssis 1. Pour cela le vérin 18 peut être un vérin à double effet et comporter en outre un accumulateur d'azote et/ou un distributeur et un capteur de niveau afin, par exemple, de maintenir l'ensemble à une hauteur déterminée.

Si ce mode de réalisation permet de régler la hauteur de suspension, il sera toujours possible de le bloquer et/ou de s'en servir par exemple pour changer une roue sans nécessiter l'utilisation d'un cric.

Suite à cette description, on peut comprendre le fonctionnement.

En ligne droite, le dispositif se trouve dans la position de la figure 2, les axes 7 et 11 perpendiculaires à l'essieu 2 étant dans un même plan sensiblement vertical.

Lorsque l'on effectue un braquage, par exemple vers la droite comme représenté sur les figures 3 et 4, les roues tournent classiquement mais le support 6 bascule en outre en pivotant par rapport au châssis autour de l'axe 7.

Comme le montre bien la figure 3, dans cette position, le braquage du véhicule ou de l'engin est nettement amélioré du fait du basculement précité, puisque l'essieu 2 aura alors en plus effectué dans son ensemble un mouvement tournant autour du point X en se décalant ainsi de sa position axiale, d'où l'expression de l'inventeur définissant un tel support comme un support à axe décalé, le basculement précité pouvant être limité en débattement au moyen des butées 14 dont la présence n'est toutefois pas obligatoire selon les réglages et les utilisations.

En outre, du fait que le point de convergence X soit choisi ici vers l'arrière, la roue intérieure, au cours du braquage, ici donc la roue 3a selon les dessins, en s'écartant du châssis 1, n'est pas gênée par ledit châssis malgré la diminution du rayon de braquage.

Un dispositif selon l'invention, facilement adaptable sur au moins certains véhicules ou engins déjà existants, est particulièrement simple et autorise d'utiliser divers systèmes de suspension tout en laissant libre l'avant du véhicule ou engin pour y aménager en cas de besoin un dispositif complémentaire d'attelage à l'avant, ou encore une prise de mouvement contrairement à ce qu'il est possible de faire avec certains dispositifs de l'art connu.

La diminution du rayon de braquage ainsi obtenue permet d'améliorer bien sûr la maniabilité du véhicule ou engin tout en diminuant l'usure de pneus.

Il est clair que les modes de réalisation décrits ci-avant sont donnés à titre d'exemples simplifiés et que de très nombreuses modifications peuvent être apportées dans le détail sans sortir du cadre de l'invention. C'est ainsi, par exemple, que la forme d'étrier du support 6 avec son axe 7 peut être plus sophistiquée avec notamment un axe 7 lui-même fixé dans un étrier solidaire d'un autre étrier inversé comportant les bras 8a, 8b. De même, en ce qui concerne les inversions, comme déjà dit, des paliers et des axes, etc.

L'invention est seulement définie par les revendications jointes.

## Revendications

1. Mécanisme de direction pour véhicule ou engin muni d'un châssis (1), comportant un support (6) et un essieu (2) qui est destiné à être fixé audit châssis (1) au moyen dudit support (6) et dont les extrémités comportent des articulations pour des roues directionnelles (3a,3b), ***caractérisé* en ce que** le support (6) de fixation de l'essieu (2) au châssis (1) est articulé d'une part, à l'essieu, en pouvant pivoter relativement à celui-ci autour d'un premier axe (11) sensiblement perpendiculaire audit essieu et dans un plan sensiblement horizontal au repos et, d'autre part, au châssis (1), en pouvant pivoter relativement à celui-ci autour d'un second axe (7) qui est dirigé perpendiculairement à l'essieu lorsque les roues sont droites et qui converge géométriquement avec ledit premier axe de pivotement (11) tandis qu'une barre de liaison (12,12') est articulée par ses extrémités, d'une part, à l'articulation de l'une des roues (3a,3b) et d'autre part, soit au châssis (1), soit au support (6) d'essieu.

2. Mécanisme de direction selon la revendication 1, ***caractérisé* en ce que** les deux axes de pivotement (7,11) convergent vers l'arrière du véhicule ou engin.

3. Mécanisme de direction selon l'une des revendications 1 et 2, ***caractérisé* en ce que** la barre de liaison (12') est articulée au support (6) d'essieu, à l'avant de celui-ci par rapport audit essieu (2).

4. Mécanisme de direction selon l'une des revendications 1 et 2, ***caractérisé* en ce que** la barre de liaison (12) est articulée au châssis (1), vers l'arrière par rapport à l'essieu (2).

5. Mécanisme de direction selon l'une des revendications 1 à 4, ***caractérisé* en ce que** le premier axe de pivotement (11) du support est constitué par des demi-axes (11a,11b) solidaires de l'essieu (2), qui tourillonnent dans des coussinets (9a,9b) du support (6).

6. Mécanisme de direction selon la revendication 5, ***caractérisé* en ce que** les coussinets (9a,9b) du support (6) pour le premier axe de pivotement (11) sont démontables.

7. Mécanisme de direction selon l'une des revendications 1 à 6, ***caractérisé* en ce que** le second axe de pivotement (7) du support (6) est solidaire de celui-ci et tourillonne par ses extrémités dans des paliers (10a,10b) du châssis.

8. Mécanisme selon l'une des revendications 1 à 7, ***caractérisé* en ce que** le support (6) d'essieu est articulé sur une monture intermédiaire (15) fixée sur le châssis (1), de manière amortie et/ou réglable en hauteur.

9. Mécanisme selon la revendication 8, ***caractérisé* en ce que** la monture intermédiaire (15) se présente sous la forme d'une plaque (16) articulée (17a,17b) d'un côté et suspendue de manière amortie et/ou réglable de l'autre.

10. Mécanisme selon l'une des revendications 1 à 9, ***caractérisé* en ce que** le support (6) d'essieu comporte au moins une butée (14) destinée à coopérer avec au moins une partie ou une butée du châssis du véhicule ou engin afin de limiter le basculement dudit support (6).

## Patentansprüche

1. Lenkung für ein Fahrzeug oder eine Maschine, versehen mit einem Chassis (1), enthaltend einen Träger (6) und eine Achse (2), die dafür bestimmt ist, an dem Chassis (1) mittels des besagten Trägers (6) befestigt zu werden und deren Enden Gelenke für gelenkte Räder (3a, 3b) aufweisen, **dadurch gekennzeichnet, dass** der Träger (6) zum Befestigen der Achse (2) an dem Chassis (1) einerseits an der Achse angelenkt ist, wobei man ihn drehen kann in Bezug auf diese um eine erste Achse (11) herum, etwa rechtwinklig zu der Achse und in einer etwa horizontalen Ebene in Ruhelage und andererseits am Chassis (1), wobei man ihn in Bezug auf dieses um eine zweite Achse (7) drehen kann, die senkrecht zur Achse ausgerichtet ist, wenn die Räder rechts sind und die konvergiert mit der besagten ersten Drehachse (11), während eine Verbindungsstange (12, 12') über ihre Enden einerseits an der Gelenkverbindung eines der Räder (3a, 3b) und andererseits entweder an dem Chassis (1) oder dem Achsträger (6) angelenkt ist.

2. Lenkung nach Anspruch 1, **dadurch gekennzeichnet, dass** die beiden Drehachsen (7, 11) zum Heck des Fahrzeugs oder der Maschine hin konvergieren.

3. Lenkung nach einem der Ansprüche 1 oder 2, **dadurch gekennzeichnet, dass** die Verbindungsstange (12') am Träger (6) der Achse im Frontbereich von diesem in Bezug auf die Achse (2) angelenkt ist.

4. Lenkung nach einem der Ansprüche 1 oder 2, **dadurch gekennzeichnet, dass** die Verbindungsstange (12) an dem Chassis (1) in Richtung zum Heck in Bezug auf die Achse (2) angelenkt ist.

5. Lenkung nach einem der Ansprüche 1 bis 4, **dadurch gekennzeichnet, dass** die erste Drehachse (11) des Trägers durch Halbachsen (11 a, 11 b) aufgebaut ist, die mit der Achse (2) verbunden sind, die in Lagern (9a, 9b) des Trägers (6) verzapft sind.

6. Lenkung nach Anspruch 5, **dadurch gekennzeichnet, dass** die Achslager (9a, 9b) des Trägers (6) für die erste Drehachse (11) demontierbar sind.

7. Lenkung nach einem der Ansprüche 1 bis 6, **dadurch gekennzeichnet, dass** die zweite Drehachse (7) des Trägers (6) mit diesem verbunden und über seine Enden in Achslagern (10a, 10 b) des Chassis verzapft ist.

8. Lenkung nach einem der Ansprüche 1 bis 7, **dadurch gekennzeichnet, dass** der Träger (6) der Achse über eine Zwischeneinrichtung (15) angelenkt ist, die über das Chassis (1) befestigt ist, gedämpft und/oder in der Höhe einstellbar.

9. Lenkung nach Anspruch 8, **dadurch gekennzeichnet, dass** die Zwischeneinrichtung (15) sich in Form einer Platte (16) zeigt, die angelenkt (17a, 17b) ist an einer Seite und an der anderen gedämpft und/oder einstellbar aufgehängt ist.

10. Lenkung nach einem der Ansprüche 1 bis 9, **dadurch gekennzeichnet, dass** der Träger (6) der Achse zumindest einen Anschlag (14) enthält, der zum Zusammenwirken mit zumindest einem Teil oder einem Anschlag des Chassis des Fahrzeugs oder der Maschine bestimmt ist, um das Schwenken des besagten Trägers (6) zu begrenzen.

## Claims

1. Steering mechanism for a vehicle or machine equipped with a chassis (1), comprising a support (6) and an axle (2) which is designed to be fixed to said chassis (1) by means of said support (6) and the ends of which comprise articulations for steering wheels (3a, 3b), **characterised in that** the support (6) for fixture of the axle (2) to the chassis (1) is articulated firstly, at the axle, so that it is capable of pivoting relative to the latter about a first axis (11) substantially perpendicular to said axle and in a plane which is substantially horizontal at rest and, secondly, at the chassis (1), so that it is capable of pivoting relative to the latter about a second axis (7) which runs perpendicularly to the axle when the wheels are straight and which converges geometrically with said first pivoting axis (11) while a linking bar (12, 12') is articulated through its ends, firstly to the articulation of one of the wheels (3a, 3b), and secondly either to the chassis (1) or to the axle support (6).

2. Steering mechanism according to claim 1, **characterised in that** the two pivoting axes (7, 11) converge towards the rear of the vehicle or machine.

3. Steering mechanism according to one of claims 1 and 2, **characterised in that** the linking bar (12') is articulated to the axle support (6) forward of the latter in relation to said axle (2).

4. Steering mechanism according to one of claims 1 and 2, **characterised in that** the linking bar (12) is articulated to the chassis (1) to the rear in relation to the axle (2).

5. Steering mechanism according to one of claims 1 to 4, **characterised in that** the first pivoting axis (11) of the support is constituted by half-pins (11a, 11b) which are locked to the axle (2) and which pivot in bearings (9a, 9b) of the support (6).

6. Steering mechanism according to claim 5, **characterised in that** the bearings (9a, 9b) of the support (6) for the first pivoting axis (11) are detachable.

7. Steering mechanism according to one of claims 1 to 6, **characterised in that** the second pivoting axis (7) of the support (6) is locked to the latter and pivots at its ends in bearings (10a, 10b) of the chassis.

8. Mechanism according to one of claims 1 to 7, **characterised in that** the axle support (6) is articulated on an intermediate mounting (15) fixed on the chassis (1) in a manner so as to be damped and/or adjustable in height.

9. Mechanism according to claim 8, **characterised in that** the intermediate mounting (15) takes the form of a plate (16) which is articulated (17a, 17b) on one side and suspended so as to be damped and/or adjustable on the other.

10. Mechanism according to one of claims 1 to 9, **characterised in that** the axle support (6) comprises at least one stop (14) designed to co-operate with at least one portion or one stop of the chassis of the vehicle or machine in order to limit the pivoting movement of said support (6).
